(19) **Europäisches Patentamt**
**European Patent Office**
**Office européen des brevets**

(11) **EP 4 298 453 B1**

(12) **EUROPEAN PATENT SPECIFICATION**

(45) Date of publication and mention
of the grant of the patent:
**25.12.2024 Bulletin 2024/52**

(21) Application number: **21709353.3**

(22) Date of filing: **25.02.2021**

(51) International Patent Classification (IPC):
*H04W 64/00* (2009.01)      *G01S 5/02* (2010.01)
*G01S 5/06* (2006.01)      *G01S 5/14* (2006.01)
*G01S 5/10* (2006.01)      *G01S 1/02* (2010.01)
*G01S 1/04* (2006.01)

(52) Cooperative Patent Classification (CPC):
**G01S 5/10; G01S 1/024; G01S 1/0428;
G01S 5/0236; H04W 64/006**

(86) International application number:
**PCT/EP2021/054660**

(87) International publication number:
**WO 2022/179688 (01.09.2022 Gazette 2022/35)**

(54) **TERRESTRIAL GNSS BACKUP USING TV TRANSMITTERS**

TERRESTRISCHE GNSS-SICHERUNG UNTER VERWENDUNG VON FERNSEHSENDERN

SAUVEGARDE GNSS TERRESTRE UTILISANT DES ÉMETTEURS DE TÉLÉVISION

(84) Designated Contracting States:
**AL AT BE BG CY CZ DE DK EE ES FI FR GB GR
HR HU IS IT LT LU LV MC MK MT NL NO PL PT
RO RS SE SI SK SM TR**

(43) Date of publication of application:
**03.01.2024 Bulletin 2024/01**

(73) Proprietor: **Rohde & Schwarz GmbH & Co. KG
81671 München (DE)**

(72) Inventors:
• **MAIER, Stefan**
  **81827 Munich (DE)**
• **PHILLIPS, Abhay**
  **81673 Munich (DE)**
• **CARDALDA-GARCIA, Adrian**
  **81369 Munich (DE)**

• **JASSOUME, Laila**
  **85586 Poing (DE)**
• **OESTREICHER, Lars**
  **80538 Munich (DE)**

(74) Representative: **Novagraaf Group
Chemin de l'Echo 3
1213 Onex / Geneva (CH)**

(56) References cited:
**US-A1- 2010 331 012     US-A1- 2012 165 012**

• **QING HU ET AL: "Development of an Automatic
Identification System Autonomous Positioning
System", SENSORS, vol. 15, no. 11, 11 November
2015 (2015-11-11), CH, pages 28574 - 28591,
XP055389796, ISSN: 1424-8220, DOI:
10.3390/s151128574**

## Description

### Technical Field

The present disclosure relates to positioning, navigation, and timing (PNT) services, and in particular to a system comprising terrestrial transmitters and a receiver of digital wireless broadcast signals, corresponding methods, and said broadcast signal.

### Background Art

Global navigation satellite systems (GNSS) such as GPS or GALILEO transmit unencrypted signals of very low power. These signals may easily be jammed, for example using a 5W jammer, or even spoofed using low-cost software-defined radio (SDR) communication systems.

Accordingly, there is a need for a GNSS backup system to provide timing and position to critical infrastructure, such as power grids, ports, airports, road tolls, cash machines, stock exchanges, and the like.

Document US 2012165012 discloses observed TDOA determination employing a reference transmitter with transmitter synchronization.

### Summary

The object of the present disclosure is to provide a robust GNSS backup system.

The claimed subject-matter is defined by the appended independent claims. Preferred embodiments are set forth in the dependent claims and in the following description and drawings.

A first aspect of the present disclosure relates to a method of geographic positioning of a receiver based on communicated positioning information. The method comprises: transmitting, by three or more time-synchronized terrestrial transmitters, a respective digital wireless broadcast signal comprising transmitter information directly or indirectly indicative of a geographic position of the transmitter of the broadcast signal, and timing information indicative of a timing of the broadcast signal; receiving, from the three or more transmitters, the respective broadcast signal at a respective time of arrival (TOA); calculating, in dependence of the respective timing information and the respective TOA, a plurality of time differences of arrival (TDOAs) of each of the transmitters but a reference transmitter of the transmitters; determining, in dependence of the respective transmitter information, a geographic position of each of the transmitters; and calculating a geographic position of the receiver in dependence of the geographic positions of the transmitters and the plurality of TDOAs.

The method may further comprise receiving a correction information indicative of a temporal correction of the timing information of the respective broadcast signal.

The correction information may depend on a ground conductivity detected at a geographic position in between the transmitters.

The broadcast signal may comprise a Further Evolved Multicast Broadcast Mobile Service (FeMBMS) signal including the transmitter information and the timing information.

The broadcast signal may comprise DVB-T2 extension frames (FEF) including the FeMBMS signal.

The broadcast signal may comprise an NB-IoT signal including the transmitter information and the timing information; and the broadcast signal may comprise a guard band of another broadcasting service, the guard band including the NarrowBand Internet of Things (NB-IoT) signal.

The transmitter information may comprise at least one of: a transmitter identifier, and a geographic transmitter position.

The timing information may comprise at least one of: a timestamp of the transmission by the transmitter of the broadcast signal, and a positioning reference signal (PRS) mapped into the broadcast signal.

A mapping of the PRS to time-frequency resources of the broadcast signal may depend on a cryptographic key.

The time-synchronizing of the transmitters may comprise providing a common primary reference clock (PRC) source for the transmitters.

The time-synchronizing may comprise using Precision Time Protocol (PTP).

The time-synchronizing may comprise using Synchronous Ethernet (SyncE) protocol.

A second aspect of the present disclosure relates to a method of transmitting positioning information for geographic positioning of a receiver. The method comprises: transmitting a digital wireless broadcast signal, comprising transmitter information directly or indirectly indicative of a geographic position of the transmitter of the broadcast signal, and timing information indicative of a timing of the broadcast signal.

The broadcast signal may comprise an FeMBMS signal including the transmitter information and the timing information.

The broadcast signal may comprise DVB-T2 FEF including the FeMBMS signal.

The broadcast signal may comprise an NB-IoT signal including the transmitter information and the timing information; and the broadcast signal may comprise a guard band of another broadcasting service, the guard band including the NB-IoT signal.

The transmitter information may comprise at least one of: a transmitter identifier, and a geographic transmitter position.

The timing information may comprise at least one of: a timestamp of the transmission by the transmitter of the broadcast signal, and a PRS mapped into the broadcast signal.

A mapping of the PRS to time-frequency resources of the broadcast signal may depend on a cryptographic key.

The time-synchronizing of the transmitter may comprise providing a common PRC source for the transmitter.

The time-synchronizing of the transmitter may comprise using PTP.

The time-synchronizing of the transmitter may comprise using SyncE.

A third aspect of the present disclosure relates to a terrestrial transmitter of a digital wireless broadcast signal. The transmitter comprises: a processing unit configured to transmit the digital wireless broadcast signal comprising transmitter information directly or indirectly indicative of a geographic position of the transmitter of the broadcast signal, and timing information indicative of a timing of the broadcast signal.

The broadcast signal may comprise an FeMBMS signal including the transmitter information and the timing information.

The broadcast signal may comprise DVB-T2 FEF including the FeMBMS signal.

The broadcast signal may comprise an NB-IoT signal including the transmitter information and the timing information; and the broadcast signal may comprise a guard band of another broadcasting service, the guard band including the NB-IoT signal.

The transmitter information may comprise at least one of: a transmitter identifier, and a geographic transmitter position.

The timing information may comprise at least one of: a timestamp of the transmission by the transmitter of the broadcast signal, and a PRS mapped into the broadcast signal.

A mapping of the PRS to time-frequency resources of the broadcast signal may depend on a cryptographic key.

A fourth aspect of the present disclosure relates to a method of geographic positioning of a receiver based on received positioning information. The method comprises: receiving, from three or more time-synchronized terrestrial transmitters, a respective digital wireless broadcast signal at a respective TOA, the respective broadcast signal comprising transmitter information directly or indirectly indicative of a geographic position of the transmitter of the broadcast signal, and timing information indicative of a timing of the broadcast signal; calculating, in dependence of the respective timing information and the respective TOA, a plurality of TDOAs of each of the transmitters but a reference transmitter of the transmitters; determining, in dependence of the respective transmitter information, a geographic position of each of the transmitters; and calculating a geographic position of the receiver in dependence of the geographic positions of the transmitters and the plurality of TDOAs.

The broadcast signal may comprise an FeMBMS signal including the transmitter information and the timing information.

The broadcast signal may comprise DVB-T2 FEF including the FeMBMS signal.

The broadcast signal may comprise an NB-IoT signal including the transmitter information and the timing information; and the broadcast signal may comprise a guard band of another broadcasting service, the guard band including the NB-IoT signal.

The transmitter information may comprise at least one of: a transmitter identifier, and a geographic transmitter position.

The timing information may comprise at least one of: a timestamp of the transmission by the transmitter of the broadcast signal, and a PRS mapped into the broadcast signal.

A mapping of the PRS to time-frequency resources of the broadcast signal may depend on a cryptographic key.

The method may further comprise receiving a correction information indicative of a temporal correction of the timing information of the respective broadcast signal.

The correction information may depend on a ground conductivity detected at a geographic position in between the transmitters.

The determining the geographic position of each of the transmitters may comprise retrieving the respective geographic position of the respective transmitter in dependence of the transmitter identifier, for example from a database hosted or cached by the receiver 5, or directly from the geographic transmitter position of the respective transmitter information.

The calculating the geographic position of the receiver may comprise performing multilateration in dependence of the geographic positions of the transmitters and a plurality of pseudo-range differences corresponding to the plurality of TDOAs .

A fifth aspect of the present disclosure relates to a receiver of digital wireless broadcast signals. The receiver comprises: a processing unit configured to receive, from three or more time-synchronized terrestrial transmitters, a respective digital wireless broadcast signal at a respective TOA, the respective broadcast signal comprising transmitter information directly or indirectly indicative of a geographic position of the transmitter of the broadcast signal, and timing information indicative of a timing of the broadcast signal; calculate, in dependence of the respective timing information and the respective TOA, a plurality of TDOAs of each of the transmitters but a reference transmitter of the transmitters; determining, in dependence of the respective transmitter information, a geographic position of each of the transmitters; and calculating the geographic position of the receiver in dependence of the geographic positions of the transmitters and the plurality of TDOAs.

The broadcast signal may comprise an FeMBMS signal including the transmitter information and the timing information.

The broadcast signal may comprise DVB-T2 FEF including the FeMBMS signal.

The broadcast signal may comprise an NB-IoT signal including the transmitter information and the timing information; and the broadcast signal may comprise a guard band of another broadcasting service, the guard band including the NB-IoT signal.

The transmitter information may comprise at least one of: a transmitter identifier, and a geographic transmitter position.

The timing information may comprise at least one of: a timestamp of the transmission by the transmitter of the broadcast signal, and a PRS mapped into the broadcast signal.

A mapping of the PRS to time-frequency resources of the broadcast signal may depend on a cryptographic key.

A sixth aspect of the present disclosure relates to a system of communicating positioning information for geographic positioning of a receiver comprises three or more time-synchronized terrestrial transmitters of respective digital wireless broadcast signals according to the third aspect or any of its implementations; and a receiver of the digital wireless broadcast signals according to the fifth aspect or any of its implementations.

A seventh aspect of the present disclosure relates to a digital wireless broadcast signal. The broadcast signal comprises: transmitter information directly or indirectly indicative of a geographic position of a terrestrial transmitter of the broadcast signal; and timing information indicative of a timing of the broadcast signal.

The broadcast signal may comprise an FeMBMS signal including the transmitter information and the timing information.

The broadcast signal may comprise DVB-T2 FEF including the FeMBMS signal.

The broadcast signal may comprise an NB-IoT signal including the transmitter information and the timing information; and the broadcast signal may comprise a guard band of another broadcasting service, the guard band including the NB-IoT signal.

The transmitter information may comprise at least one of: a transmitter identifier, and a geographic transmitter position.

The timing information may comprise at least one of: a timestamp of the transmission by the transmitter of the broadcast signal, and a PRS mapped into the broadcast signal.

A mapping of the PRS to time-frequency resources of the broadcast signal may depend on a cryptographic key.

**Advantageous Effects**

The present disclosure provides a terrestrial GNSS backup system that is largely invulnerable to jamming and spoofing. The system is based on broadcasting of digital television (TV) signals including 3GPP signals, such as FeMBMS or NB-IoT, with embedded positioning information. The resulting positioning approach

- requires no extra / dedicated spectrum,
- is compatible with Observed Time Difference Of Arrival (OTDOA) positioning in 3GPP 4G,
- can be carried out using existing 3GPP 4G modem chipsets (with OTDOA support, commercially available in US) with mainly SW modifications,
- can be used worldwide,
- is energy efficient due to integration in TV transmitters,
- is more economical, as existing TV transmitters and antennas are reused and transmitters do not have to be significantly modified, and
- is attack-proof.

**Brief Description of Drawings**

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1 illustrates a system comprising terrestrial transmitters and a receiver in accordance with the present disclosure, and corresponding methods in accordance with the present disclosure;

FIGs. 2 - 5 schematically illustrate digital wireless broadcast signals in accordance with the present disclosure;

FIG. 6 schematically illustrates a terrestrial transmitter in accordance with the present disclosure; and

FIG. 7 schematically illustrates a receiver in accordance with the present disclosure.

**Detailed Descriptions of Drawings**

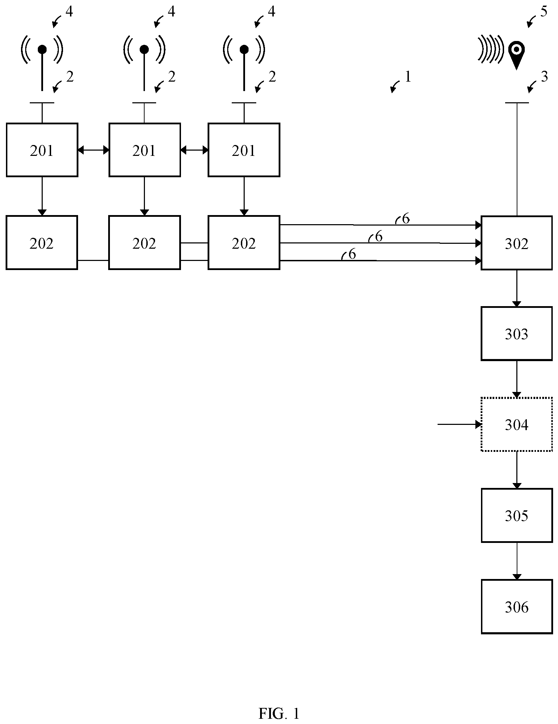

FIG. 1 illustrates a system 4, 5 comprising terrestrial transmitters 4 and a receiver 5 in accordance with the present disclosure, and corresponding methods 1, 2, 3 in accordance with the present disclosure;

The system 4, 5 is for communicating positioning information from the three (or more) time-synchronized terrestrial transmitters 4 for geographic positioning of the receiver 5 of the digital wireless broadcast signals 6.

Each of the terrestrial transmitters 4 shown to the left of FIG. 1 performs a method 2 of transmitting positioning information for geographic positioning of the receiver 5.

The method 2 comprises a step of time-synchronizing 201 the transmitters 4. The time-synchronizing 201 of the transmitters 4 may comprise providing the transmitters 4 with a common primary reference clock (PRC) source in accordance with a master-slave synchronization approach. The time-synchronizing 201 of the transmitters 4 may comprise using the Precision Time Protocol (PTP, IEEE 1588) for clock synchronization and/or the Synchronous Ethernet (SyncE) protocol for clock syntonization (i.e., frequency synchronization). For example, it may be chosen to use a "High Accuracy Request-Response Default PTP Profile" (Annex 1.5) of IEEE 1588-2019 to interconnect switches and nodes, which is also commonly referred to as CERN's "White Rabbit" time synchronization protocol. The transmitters 4 need to be synchronized to 3GPP frame boundaries, and the PRS occasions for all transmitters 4 on a same frequency layer need to be aligned in time.

The method 2 further comprises a step of transmitting 202 a digital wireless broadcast signal 6. The digital wireless broadcast signal 6 comprises transmitter information 601 and timing information 602.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6.

A PRS as used herein may refer to a pseudo-random QPSK sequence that is mapped into time-frequency resources of a 4G/5G signal in diagonal patterns with shifts in frequency and time. PRS facilitate ranging measurements of a terminal (receiver) from eNodeB (transmitter) signals to improve positioning performance. PRS are transmitted in pre-defined "positioning occasions". Positioning occasions occur with a periodicity $T_{PRS}$ (subframes, or milli-seconds) and then extend across a number $N_{PRS}$ of consecutive subframes. A starting subframe of PRS transmission, relative to SFN=0, is given by the cell specific PRS subframe offset $\Delta_{PRS}$. A PRS configuration index $I_{PRS}$ defines the PRS transmission schedule (i.e., $\Delta_{PRS}$ and $T_{PRS}$). A mapping of the PRS 607 to time-frequency resources of the broadcast signal 6 may depend on a cryptographic key. The mapping of the PRS 607 to time-frequency resources of the broadcast signal 6 may be made time-variant such that an ability to continuously track the PRS 607 requires knowledge and use of the cryptographic key. By deriving the PRS 607 time-frequency pattern from a pseudo-random sequence, usage may be restricted to subscribed users, and the navigation signal may be authenticated to harden the system against spoofing.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605. Both concepts achieve a similar purpose, the NB-IoT approach being less spectrally efficient, however.

FeMBMS as used herein may refer to a 3GPP point-to-multipoint service for efficient cellular multicast/broadcast. The service involves deploying IP multicast, forming dynamic single-frequency networks (SFNs) across cells, and the like measures.

NB-IoT as used herein may refer to a 3GPP Low Power Wide Area Network (LPWAN) service for battery-efficient machine-to-machine (M2M) communication. NB-IoT derives its name from its support of bandwidth-limited receivers (200kHz).

DVB-T2 as used herein may refer to an ETSI standard for broadcast transmission of digital terrestrial television and suited for carrying HDTV signals.

The receiver 5 on its part performs a method 3 of geographic positioning of the receiver 5 based on received positioning information.

The method 3 comprises a step of receiving 302 a respective digital wireless broadcast signal 6 at a respective time of arrival (TOA) from three or more time-synchronized terrestrial transmitters 4. The respective broadcast signal 6 comprises transmitter information 601 and timing information 602.

Time of arrival (TOA) as used herein may refer to an absolute time instant when a radio signal emanating from a transmitter reaches a remote receiver. TOA corresponds to a sum of a time of transmission (TOT) and a time of flight from the respective transmitter $i$ ($TOF_i$):

$$TOA_i = TOT + TOF_i.$$

Time difference of arrival (TDOA) as used herein may refer to a difference between TOAs, which effectively cancels the TOT:

$$TDOA_{ij} = TOA_i - TOA_j = TOT + TOF_i - (TOT + TOF_j) = TOF_i - TOF_j.$$

Each $TDOA_{ij}$ locates the receiver 5 on a hyperbola focused on the involved transmitters 4, and the geographic position of the receiver 5 is at an intersection of multiple hyperbolas.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6. A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

The method 3 further comprises a step of calculating 303 a plurality of time differences of arrival (TDOAs) of each of the transmitters 4 but a reference transmitter 4 of the transmitters 4 in dependence of the respective timing information 602 and the respective TOA.

The method 3 may further comprise a step of receiving 304 a correction information indicative of a temporal correction of the timing information 602 of a respective broadcast signal 6. The correction information may depend on a ground conductivity, since its variations may influence a propagation of the broadcast signal 6. Ground conductivity may be detected by a network of terrestrial monitoring stations located at geographic positions in between the transmitters 4 and broadcasting or otherwise communicating a difference between their fixed geographic positions and the geographic positions indicated by the transmitters 4. Receivers 5 may correct their pseudo-range differences by the same amount.

The method 3 further comprises a step of determining 305 a geographic position of each of the transmitters 4 in dependence of the respective transmitter information 601. The determining 305 the geographic position of each of the transmitters 4 may comprise retrieving the respective geographic position of the respective transmitter 4 in dependence of the transmitter identifier, for example from a database hosted or cached by the receiver 5, or directly from the geographic transmitter position of the respective transmitter information 601.

The method 3 further comprises a step of calculating 306 a geographic position of the receiver 5 in dependence of the geographic positions of the transmitters 4 and the plurality of TDOAs. The calculating 306 the geographic position of the receiver 5 may comprise performing multilateration in dependence of the geographic positions of the transmitters 4 and a plurality of pseudo-range differences corresponding to the plurality of TDOAs (pseudo-range differences are obtained when multiplying TDOAs by the group velocity, i.e. the speed of propagation of an information carried by the broadcast signal 6).

Multilateration as used herein may refer to a technique for geographic positioning based on measurement of TOAs of energy waves having a known group velocity when propagating from multiple transmitters. These transmitters are at known geographic locations and have synchronized clocks. A minimum of $d+1$ TOAs are required to determine the receiver's geographic position in $d$ dimensions.

Collectively, the transmitters 4 and the receiver 5 forming the system 4, 5 perform a method 1 of geographic positioning of the receiver 5 based on communicated positioning information. The method 1 substantially comprises the steps already explained in connection with the methods 2, 3 above.

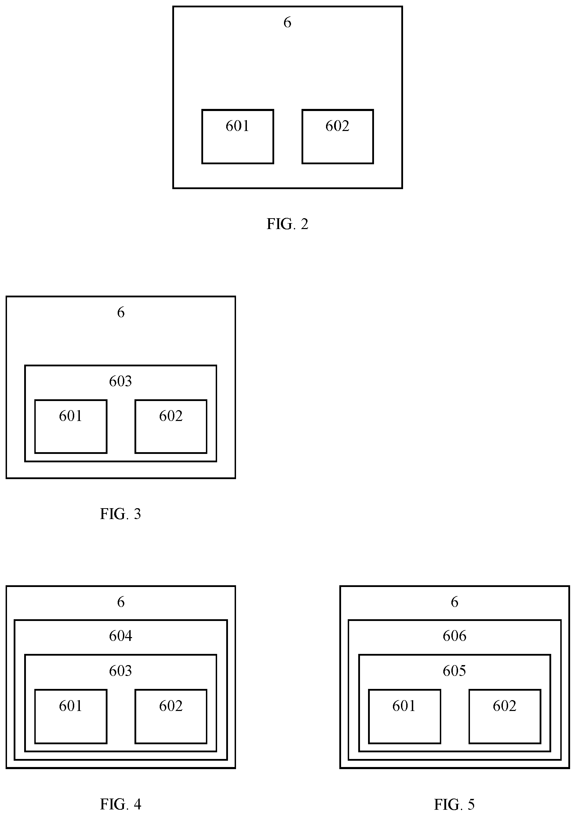

FIG. 2 - 5 schematically illustrate digital wireless broadcast signals 6 in accordance with the present disclosure; and

A digital wireless broadcast signal 6 comprises transmitter information 601 and timing information 602.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6. A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

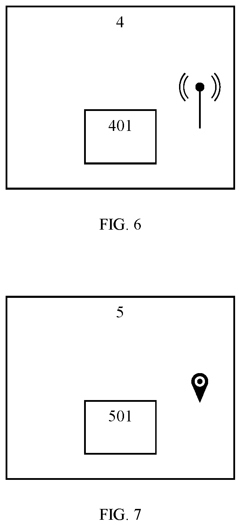

FIG. 6 schematically illustrates a terrestrial transmitter 4 in accordance with the present disclosure.

A terrestrial transmitter 4 of a digital wireless broadcast signal 6 comprises a processing unit 401.

The processing unit 401 is configured to transmit 202 the digital wireless broadcast signal 6 comprising transmitter information 601 and timing information 602.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6.

A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

FIG. 7 schematically illustrates a receiver 5 in accordance with the present disclosure.

A receiver 5 of digital wireless broadcast signals 6 comprises a processing unit 501.

The processing unit 501 is configured to receive 302, from three or more time-synchronized terrestrial transmitters 4, a respective digital wireless broadcast signal 6 at a respective time of arrival (TOA). The respective broadcast signal 6 comprises transmitter information 601 and timing information 602.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6. A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

The processing unit 501 is further configured to calculate 303, in dependence of the respective timing information 602 and the respective TOA, a plurality of time differences of arrival (TDOAs) of each of the transmitters 4 but a reference transmitter 4 of the transmitters 4.

The processing unit 501 may further be configured to receive 304 a correction information indicative of a temporal correction of the timing information 602 of a respective broadcast signal 6. The correction information may depend on a ground conductivity detected at a geographic position in between the transmitters.

The processing unit 501 is further configured to determine 305, in dependence of the respective transmitter information 601, a geographic position of each of the transmitters 4. The determining 305 the geographic position of each of the transmitters 4 may comprise retrieving the respective geographic position of the respective transmitter 4 in dependence of the transmitter identifier, for example from a database hosted or cached by the receiver 5, or directly from the geographic transmitter position of the respective transmitter information 601.

The processing unit 501 is further configured to calculating 306 the geographic position of the receiver 5 in dependence of the geographic positions of the transmitters 4 and the plurality of TDOAs. The calculating 306 the geographic position of the receiver 5 may comprise performing multilateration in dependence of the geographic positions of the transmitters 4 and a plurality of pseudo-range differences corresponding to the plurality of TDOAs.

**Claims**

1. A method (1) of geographic positioning of a receiver (5) based on communicated positioning information, comprising

    transmitting (202), by three or more time-synchronized (201) terrestrial transmitters (4), a respective digital wireless broadcast signal (6) comprising

        transmitter information (601) directly or indirectly indicative of a geographic position of the transmitter (4) of the broadcast signal (6); and
        timing information (602) indicative of a timing of the broadcast signal (6);

        receiving (302), by the receiver (5) and from the three or more transmitters (4), the respective broadcast signal (6) at a respective time of arrival (TOA);
        calculating (303), by the receiver (5), in dependence of the respective timing information (602) and the respective TOA, a plurality of time differences of arrival (TDOAs) of each of the transmitters (4) but a reference transmitter (4) of the transmitters (4);
        determining (305), by the receiver (5), in dependence of the respective transmitter information (601), a geographic position of each of the transmitters (4); and
        calculating (306), by the receiver (5), a geographic position of the receiver (5) in dependence of the geographic positions of the transmitters (4) and the plurality of TDOAs,
        the respective broadcast signal (6) comprising an FeMBMS signal (603) including the transmitter information (601) and the timing information (602).

2. The method (1) of claim 1,
   the broadcast signal (6) comprising DVB-T2 extension frames (FEF) (604) including the FeMBMS signal (603).

3. The method (1) of claim 1 or claim 2,
   the transmitter information (601) comprising at least one of:

    a transmitter identifier, and
    a transmitter position.

4. The method (1) of any one of the claims 1 to 3,
   the timing information (602) comprising at least one of:

    a timestamp of the transmission by the transmitter (4) of the broadcast signal (6), and

a positioning reference signal (PRS) (607) mapped into the broadcast signal (6).

**5.** The method (1) of claim 4,
a mapping of the PRS (607) to time-frequency resources of the broadcast signal (6) depending on a cryptographic key.

**6.** The method (1) of any one of the claims 1 to 5, further comprising
the time-synchronizing (201) of the transmitters (4) comprising providing a common primary reference clock (PRC) source for the transmitters (4).

**7.** The method (1) of any one of the claims 1 to 6,
the time-synchronizing (201) comprising using the Precision Time Protocol (PTP).

**8.** The method (1) of any one of the claims 1 to 7,
the time-synchronizing (201) comprising using the Synchronous Ethernet (SyncE) protocol.

**9.** The method (3) of any one of the claims 1 to 8, further comprising
receiving (304), by the receiver (5), correction information indicative of a temporal correction of the timing information (602) of the respective broadcast signal (6).

**10.** The method (3) of claim 9,
the correction information depending on a ground conductivity detected at a geographic position in between the transmitters (4).

**11.** A method (2) of transmitting positioning information for geographic positioning of a receiver (5), comprising

transmitting (202) a digital wireless broadcast signal (6), comprising

transmitter information (601) directly or indirectly indicative of a geographic position of the transmitter (4) of the broadcast signal (6); and
timing information (602) indicative of a timing of the broadcast signal (6),

the broadcast signal (6) comprising an FeMBMS signal (603) including the transmitter information (601) and the timing information (602).

**12.** The method (2) of claim 11,
the broadcast signal (6) comprising DVB-T2 extension frames (FEF) (604) including the FeMBMS signal (603).

**13.** The method (2) of claim 11 or claim 12,
the transmitter information (601) comprising at least one of:

a transmitter identifier, and
a transmitter position.

**14.** The method (2) of any one of the claims 11 to 13,
the timing information (602) comprising at least one of:

a timestamp of the transmission by the transmitter (4) of the broadcast signal (6), and
a positioning reference signal (PRS) (607) mapped into the broadcast signal (6).

**15.** The method (2) of claim 14,
a mapping of the PRS (607) to time-frequency resources of the broadcast signal (6) depending on a cryptographic key.

**16.** The method (2) of any one of the claims 11 to 15,
the time-synchronizing (201) of the transmitter (4) comprising providing a common primary reference clock (PRC) source for the transmitter (4).

**17.** The method (2) of any one of the claims 11 to 16,
the time-synchronizing (201) of the transmitter (4) comprising using the Precision Time Protocol (PTP).

18. The method (2) of any one of the claims 11 to 17,
the time-synchronizing (201) of the transmitter (4) comprising using the Synchronous Ethernet (SyncE) protocol.

19. A terrestrial transmitter (4) of a digital wireless broadcast signal (6), comprising

a processing unit (401) configured to
transmit (202) the digital wireless broadcast signal (6) comprising

transmitter information (601) directly or indirectly indicative of a geographic position of the transmitter (4)
of the broadcast signal (6); and
timing information (602) indicative of a timing of the broadcast signal (6),

the broadcast signal (6) comprising an FeMBMS signal (603) including the transmitter information (601) and
the timing information (602).

20. The transmitter (4) of claim 19,
the broadcast signal (6) comprising DVB-T2 extension frames (FEF) (604) including the FeMBMS signal (603).

21. The transmitter (4) of claim 19 or claim 20,
the transmitter information (601) comprising at least one of:

a transmitter identifier, and
a transmitter position.

22. The transmitter (4) of any one of the claims 19 to 21,
the timing information (602) comprising at least one of:

a timestamp of the transmission by the transmitter (4) of the broadcast signal (6), and
a positioning reference signal (PRS) (607) mapped into the broadcast signal (6).

23. The transmitter (4) of claim 22,
a mapping of the PRS (607) to time-frequency resources of the broadcast signal (6) depending on a cryptographic key.

24. A method (3) of geographic positioning of a receiver (5) based on received positioning information, comprising

receiving (302), from three or more time-synchronized terrestrial transmitters (4), a respective digital wireless
broadcast signal (6) at a respective time of arrival (TOA), the respective broadcast signal (6) comprising

transmitter information (601) directly or indirectly indicative of a geographic position of the transmitter (4)
of the broadcast signal (6); and
timing information (602) indicative of a timing of the broadcast signal (6);

calculating (303), in dependence of the respective timing information (602) and the respective TOA, a plurality
of time differences of arrival (TDOAs) of each of the transmitters (4) but a reference transmitter (4) of the
transmitters (4);
determining (305), in dependence of the respective transmitter information (601), a geographic position of each
of the transmitters (4); and
calculating (306) a geographic position of the receiver (5) in dependence of the geographic positions of the
transmitters (4) and the plurality of TDOAs,
the respective broadcast signal (6) comprising an FeMBMS signal (603) including the transmitter information
(601) and the timing information (602).

25. A receiver (5) of digital wireless broadcast signals (6), comprising

a processing unit (501) configured to

receive (302), from three or more time-synchronized terrestrial transmitters (4), a respective digital wireless
broadcast signal (6) at a respective time of arrival (TOA), the respective broadcast signal (6) comprising

transmitter information (601) directly or indirectly indicative of a geographic position of the transmitter (4) of the broadcast signal (6); and
timing information (602) indicative of a timing of the broadcast signal (6);

calculate (303), in dependence of the respective timing information (602) and the respective TOA, a plurality of time differences of arrival (TDOAs) of each of the transmitters (4) but a reference transmitter (4) of the transmitters (4);
determine (305), in dependence of the respective transmitter information (601), a geographic position of each of the transmitters (4); and
calculate (306) the geographic position of the receiver (5) in dependence of the geographic positions of the transmitters (4) and the plurality of TDOAs,

the respective broadcast signal (6) comprising an FeMBMS signal (603) including the transmitter information (601) and the timing information (602).

26. The receiver (5) of claim 25,
the broadcast signal (6) comprising DVB-T2 extension frames (FEF) (604) including the FeMBMS signal (603).

27. The receiver (5) of claim 25 or claim 26,
the transmitter information (601) comprising at least one of:

a transmitter identifier, and
a transmitter position.

28. The receiver (5) of any one of the claims 25 to 27,
the timing information (602) comprising at least one of:

a timestamp of the transmission by the transmitter (4) of the broadcast signal (6), and
a positioning reference signal (PRS) (607) mapped into the broadcast signal (6).

29. The receiver (5) of claim 28,
a mapping of the PRS (607) to time-frequency resources of the broadcast signal (6) depending on a cryptographic key.

30. The receiver (5) of any one of the claims 25 to 29,
the processing unit (501) further configured to
receive (304) correction information indicative of a temporal correction of the timing information (602) of the respective broadcast signal (6).

31. The receiver (5) of claim 30,
the correction information depending on a ground conductivity detected at a geographic position in between the transmitters (4).

32. A system (4, 5) of communicating positioning information for geographic positioning of a receiver (5), comprising

three or more time-synchronized terrestrial transmitters (4) of respective digital wireless broadcast signals (6) according to any one of the claims 19 to 23; and
a receiver (5) of the digital wireless broadcast signals (6) according to any one of the claims 25 to 31.

33. A digital wireless broadcast signal (6), comprising

transmitter information (601) directly or indirectly indicative of a geographic position of a terrestrial transmitter (4) of the broadcast signal (6); and
timing information (602) indicative of a timing of the broadcast signal (6);
the broadcast signal (6) comprising an FeMBMS signal (603) including the transmitter information (601) and the timing information (602).

**EP 4 298 453 B1**

**Patentansprüche**

1. Verfahren (1) zum geografischen Positionieren eines Empfängers (5) basierend auf kommunizierten Positionierungsinformationen, umfassend

    Senden (202), durch drei oder mehr zeitsynchronisierte (201) terrestrische Sender (4), eines jeweiligen digitalen drahtlosen Rundfunksignals (6), umfassend
    Senderinformationen (601), die direkt oder indirekt eine geografische Position des Senders (4) des Rundfunksignals (6) angeben; und
    Timing-Informationen (602), die ein Timing des Rundfunksignals (6) angeben;
    Empfangen (302), durch den Empfänger (5) und von den drei oder mehr Sendern (4), des jeweiligen Rundfunksignals (6) zu einer jeweiligen Ankunftszeit (TOA);
    Berechnen (303), durch den Empfänger (5), in Abhängigkeit von den jeweiligen Timing-Informationen (602) und der jeweiligen TOA, einer Vielzahl von Ankunftszeitdifferenzen (TDOAs) jedes der Sender (4) außer einem Referenzsender (4) der Sender (4);
    Bestimmen (305), durch den Empfänger (5), in Abhängigkeit von den jeweiligen Senderinformationen (601), einer geografischen Position jedes der Sender (4); und
    Berechnen (306), durch den Empfänger (5), einer geografischen Position des Empfängers (5) in Abhängigkeit von den geografischen Positionen der Sender (4) und der Vielzahl von TDOAs,
    das jeweilige Rundfunksignal (6) umfassend ein FeMBMS-Signal (603) einschließlich der Senderinformationen (601) und der Timing-Informationen (602).

2. Verfahren (1) nach Anspruch 1,
   das Rundfunksignal (6) umfassend DVB-T2-Erweiterungsrahmen (FEF) (604) einschließlich des FeMBMS-Signals (603).

3. Verfahren (1) nach Anspruch 1 oder 2,
   die Senderinformationen (601) umfassend mindestens eines von:

    einen Senderidentifizierer und
    eine Senderposition.

4. Verfahren (1) nach einem der Ansprüche 1 bis 3,
   die Timing-Informationen (602) umfassend mindestens eines von:
   einen Zeitstempel der Sendung des Rundfunksignals (6) durch den Sender (4), und ein Positionierungsreferenzsignal (PRS) (607), das in das Rundfunksignal (6) abgebildet ist.

5. Verfahren (1) nach Anspruch 4,
   ein Abbilden des PRS (607) auf Zeit-Frequenz-Ressourcen des Rundfunksignals (6) in Abhängigkeit von einem kryptographischen Schlüssel.

6. Verfahren (1) nach einem der Ansprüche 1 bis 5, ferner umfassend
   das Zeitsynchronisieren (201) der Sender (4) umfassend ein Bereitstellen einer gemeinsamen primären Referenztaktquelle (PRC-Quelle) für die Sender (4).

7. Verfahren (1) nach einem der Ansprüche 1 bis 6,
   das Zeitsynchronisieren (201) umfassend ein Verwenden des Präzisionszeitprotokolls (PTP).

8. Verfahren (1) nach einem der Ansprüche 1 bis 7,
   das Zeitsynchronisieren (201) umfassend das Verwenden des Protokolls eines synchronen Ethernets (SyncE-Protokoll).

9. Verfahren (3) nach einem der Ansprüche 1 bis 8, ferner umfassend
   Empfangen (304), durch den Empfänger (5), von Korrekturinformationen, die eine zeitliche Korrektur der Timinig-Informationen (602) des jeweiligen Rundfunksignals (6) angeben.

10. Verfahren (3) nach Anspruch 9,
    wobei die Korrekturinformationen von einer Bodenleitfähigkeit abhängen, die an einer geografischen Position zwischen den Sendern (4) erfasst wird.

11. Verfahren (2) zum Senden von Positionierungsinformationen zum geografischen Positionieren eines Empfängers (5), umfassend

Senden (202) eines digitalen drahtlosen Rundfunksignals (6), umfassend
Senderinformationen (601), die direkt oder indirekt eine geografische Position des Senders (4) des Rundfunksignals (6) angeben; und
Timing-Informationen (602), die ein Timing des Rundfunksignals (6) angeben,
das Rundfunksignal (6) umfassend ein FeMBMS-Signal (603) einschließlich der Senderinformationen (601) und der Timing-Informationen (602).

12. Verfahren (2) nach Anspruch 11,
das Rundfunksignal (6) umfassend DVB-T2-Erweiterungsrahmen (FEF) (604) einschließlich des FeMBMS-Signals (603).

13. Verfahren (2) nach Anspruch 11 oder 12, die Senderinformationen (601) umfassend mindestens eines von:

einen Senderidentifizierer und
eine Senderposition.

14. Verfahren (2) nach einem der Ansprüche 11 bis 13,
die Timing-Informationen (602) umfassend mindestens eines von:
einen Zeitstempel der Sendung des Rundfunksignals (6) durch den Sender (4), und ein Positionierungsreferenzsignal (PRS) (607), das in das Rundfunksignal (6) abgebildet ist.

15. Verfahren (2) nach Anspruch 14,
ein Abbilden des PRS (607) auf Zeit-Frequenz-Ressourcen des Rundfunksignals (6) in Abhängigkeit von einem kryptographischen Schlüssel.

16. Verfahren (2) nach einem der Ansprüche 11 bis 15,
das Zeitsynchronisieren (201) des Senders (4) umfassend das Bereitstellen einer gemeinsamen primären Referenztaktquelle (PRC-Quelle) für den Sender (4).

17. Verfahren (2) nach einem der Ansprüche 11 bis 16,
das Zeitsynchronisieren (201) des Senders (4) umfassend das Verwenden des Präzisionszeitprotokolls (PTP).

18. Verfahren (2) nach einem der Ansprüche 11 bis 17,
das Zeitsynchronisieren (201) des Senders (4) umfassend das Verwenden des Protokolls des synchronen Ethernets (SyncE-Protokoll).

19. Terrestrischer Sender (4) eines digitalen drahtlosen Rundfunksignals (6), umfassend

eine Verarbeitungseinheit (401), die konfiguriert ist zum
Senden (202) des digitalen drahtlosen Rundfunksignals (6), umfassend
Senderinformationen (601), die direkt oder indirekt eine geografische Position des Senders (4) des Rundfunksignals (6) angeben; und
Timing-Informationen (602), die ein Timing des Rundfunksignals (6) angeben,
das Rundfunksignal (6) umfassend ein FeMBMS-Signal (603) einschließlich der Senderinformationen (601) und der Timing-Informationen (602).

20. Sender (4) nach Anspruch 19,
das Rundfunksignal (6) umfassend DVB-T2-Erweiterungsrahmen (FEF) (604) einschließlich des FeMBMS-Signals (603).

21. Sender (4) nach Anspruch 19 oder 20,
die Senderinformationen (601) umfassend mindestens eines von:

einen Senderidentifizierer und
eine Senderposition.

**22.** Sender (4) nach einem der Ansprüche 19 bis 21,
die Timing-Informationen (602) umfassend mindestens eines von:

einen Zeitstempel der Sendung des Rundfunksignals (6) durch den Sender (4), und
ein Positionierungsreferenzsignal (PRS) (607), das in das Rundfunksignal (6) abgebildet ist.

**23.** Sender (4) nach Anspruch 22,
ein Abbilden des PRS (607) auf Zeit-Frequenz-Ressourcen des Rundfunksignals (6) in Abhängigkeit von einem kryptographischen Schlüssel.

**24.** Verfahren (3) zum geografischen Positionieren eines Empfängers (5) basierend auf empfangenen Positionierungsinformationen, umfassend

Empfangen (302), von drei oder mehr zeitsynchronisierten terrestrischen Sendern (4), eines jeweiligen digitalen drahtlosen Rundfunksignals (6) zu einer jeweiligen Ankunftszeit (TOA), das jeweilige Rundfunksignal (6) umfassend
Senderinformationen (601), die direkt oder indirekt eine geografische Position des Senders (4) des Rundfunksignals (6) angeben; und
Timing-Informationen (602), die ein Timing des Rundfunksignals (6) angeben;
Berechnen (303), in Abhängigkeit von den jeweiligen Timing-Informationen (602) und der jeweiligen TOA, einer Vielzahl von Ankunftszeitdifferenzen (TDOAs) jedes der Sender (4) außer einem Referenzsender (4) der Sender (4);
Bestimmen (305), in Abhängigkeit von den jeweiligen Senderinformationen (601), einer geografischen Position jedes der Sender (4); und
Berechnen (306) einer geografischen Position des Empfängers (5) in Abhängigkeit von den geografischen Positionen der Sender (4) und der Vielzahl von TDOAs,
das jeweilige Rundfunksignal (6) umfassend ein FeMBMS-Signal (603) einschließlich der Senderinformationen (601) und der Timing-Informationen (602).

**25.** Empfänger (5) von digitalen drahtlosen Rundfunksignalen (6), umfassend

eine Verarbeitungseinheit (501), die konfiguriert ist zum
Empfangen (302), von drei oder mehr zeitsynchronisierten terrestrischen Sendern (4), eines jeweiligen digitalen drahtlosen Rundfunksignals (6) zu einer jeweiligen Ankunftszeit (TOA), das jeweilige Rundfunksignal (6) umfassend
Senderinformationen (601), die direkt oder indirekt eine geografische Position des Senders (4) des Rundfunksignals (6) angeben; und
Timing-Informationen (602), die ein Timing des Rundfunksignals (6) angeben;
Berechnen (303), in Abhängigkeit von den jeweiligen Timing-Informationen (602) und der jeweiligen TOA, einer Vielzahl von Ankunftszeitdifferenzen (TDOAs) jedes der Sender (4) außer einem Referenzsender (4) der Sender (4);
Bestimmen (305), in Abhängigkeit von den jeweiligen Senderinformationen (601), einer geografischen Position jedes der Sender (4); und
Berechnen (306) der geografischen Position des Empfängers (5) in Abhängigkeit von den geografischen Positionen der Sender (4) und der Vielzahl von TDOAs,
das jeweilige Rundfunksignal (6) umfassend ein FeMBMS-Signal (603) einschließlich der Senderinformationen (601) und der Timing-Informationen (602).

**26.** Empfänger (5) nach Anspruch 25,
das Rundfunksignal (6) umfassend DVB-T2-Erweiterungsrahmen (FEF) (604) einschließlich des FeMBMS-Signals (603).

**27.** Empfänger (5) nach Anspruch 25 oder 26,
die Senderinformationen (601) umfassend mindestens eines von:

einen Senderidentifizierer und
eine Senderposition.

**28.** Empfänger (5) nach einem der Ansprüche 25 bis 27,
die Timing-Informationen (602) umfassend mindestens eines von:
einen Zeitstempel der Sendung des Rundfunksignals (6) durch den Sender (4), und ein Positionierungsreferenzsignal (PRS) (607), das in das Rundfunksignal (6) abgebildet ist.

**29.** Empfänger (5) nach Anspruch 28,
ein Abbilden des PRS (607) auf Zeit-Frequenz-Ressourcen des Rundfunksignals (6) in Abhängigkeit von einem kryptographischen Schlüssel.

**30.** Empfänger (5) nach einem der Ansprüche 25 bis 29,

wobei die Verarbeitungseinheit (501) ferner konfiguriert ist zum
Empfangen (304) von Korrekturinformationen, die eine zeitliche Korrektur der Timing-Informationen (602) des jeweiligen Rundfunksignals (6) angeben.

**31.** Verfahren (5) nach Anspruch 30,
wobei die Korrekturinformationen von einer Bodenleitfähigkeit abhängen, die an einer geografischen Position zwischen den Sendern (4) erfasst wird.

**32.** System (4, 5) zum Kommunizieren von Positionierungsinformationen zum geografischen Positionieren eines Empfängers (5), umfassend

drei oder mehr zeitsynchronisierte terrestrische Sender (4) von jeweiligen digitalen drahtlosen Rundfunksignalen (6) nach einem der Ansprüche 19 bis 23; und
einen Empfänger (5) der digitalen drahtlosen Rundfunksignale (6) nach einem der Ansprüche 25 bis 31.

**33.** Digitales drahtloses Rundfunksignal (6), umfassend

Senderinformationen (601), die direkt oder indirekt eine geografische Position eines terrestrischen Senders (4) des Rundfunksignals (6) angeben; und
Timing-Informationen (602), die ein Timing des Rundfunksignals (6) angeben;
das Rundfunksignal (6) umfassend ein FeMBMS-Signal (603) einschließlich der Senderinformationen (601) und der Timing-Informationen (602).

**Revendications**

**1.** Procédé (1) de positionnement géographique d'un récepteur (5) sur la base d'informations de positionnement communiquées, comprenant

la transmission (202), par trois émetteurs terrestres (4) synchronisés dans le temps (201) ou plus, d'un signal de radiodiffusion (6) numérique sans fil respectif comprenant
des informations d'émetteur (601) indiquant directement ou indirectement la position géographique de l'émetteur (4) du signal de radiodiffusion (6) ; et
des informations de temporisation (602) indiquant une temporisation du signal de radiodiffusion (6) ;
la réception (302), par le récepteur (5) et à partir des trois émetteurs ou plus (4), du signal de radiodiffusion (6) respectif à un temps d'arrivée (TOA) respectif ;
le calcul (303), par le récepteur (5), en fonction des informations de temporisation (602) respectives et du TOA respectif, d'une pluralité de temps d'arrivée différents (TDOA) de chacun des émetteurs (4) par rapport à un émetteur de référence (4) des émetteurs (4) ;
la détermination (305), par le récepteur (5), en fonction des informations d'émetteur (601) respectives, d'une position géographique de chacun des émetteurs (4) ; et
le calcul (306), par le récepteur (5), d'une position géographique du récepteur (5) en fonction des positions géographiques des émetteurs (4) et de la pluralité de TDOA,
le signal de radiodiffusion (6) respectif comprenant un signal FeMBMS (603) comportant les informations d'émetteur (601) et les informations de temporisation (602).

2. Procédé (1) selon la revendication 1,
le signal de radiodiffusion (6) comprenant des trames d'extension DVB-T2 (FEF) (604) comportant le signal FeMBMS (603).

3. Procédé (1) selon la revendication 1 ou la revendication 2,
les informations d'émetteur (601) comprenant au moins l'un parmi :

   un identificateur d'émetteur, et
   une position d'émetteur.

4. Procédé (1) selon l'une quelconque des revendications 1 à 3,
les informations de temporisation (602) comprenant au moins l'un parmi :

   un horodatage de la transmission par l'émetteur (4) du signal de radiodiffusion (6), et
   un signal de référence de positionnement (PRS) (607) mappé dans le signal de radiodiffusion (6).

5. Procédé (1) selon la revendication 4,
une mise en correspondance du PRS (607) avec les ressources temps-fréquence du signal de radiodiffusion (6) en fonction d'une clé cryptographique.

6. Procédé (1) selon l'une quelconque des revendications 1 à 5, comprenant en outre
la synchronisation temporelle (201) des émetteurs (4) comprenant la fourniture d'une source d'horloge de référence primaire (PRC) commune pour les émetteurs (4).

7. Procédé (1) selon l'une quelconque des revendications 1 à 6,
la synchronisation temporelle (201) comprenant l'utilisation du protocole de temps de précision (PTP).

8. Procédé (1) selon l'une quelconque des revendications 1 à 7,
la synchronisation temporelle (201) comprenant l'utilisation du protocole Synchronous Ethernet (SyncE).

9. Procédé (3) selon l'une quelconque des revendications 1 à 8, comprenant en outre
la réception (304), par le récepteur (5), des informations de correction indiquant une correction temporelle des informations de temporisation (602) du signal de radiodiffusion (6) respectif.

10. Procédé (3) selon la revendication 9,
les informations de correction en fonction de la conductivité du sol détectée à une position géographique située entre les émetteurs (4).

11. Procédé (2) de transmission d'informations de positionnement pour le positionnement géographique d'un récepteur (5), comprenant

   la transmission (202) d'un signal de radiodiffusion (6) numérique sans fil, comprenant
   des informations d'émetteur (601) indiquant directement ou indirectement la position géographique de l'émetteur (4) du signal de radiodiffusion (6) ; et
   des informations de temporisation (602) indiquant une temporisation du signal de radiodiffusion (6),
   le signal de radiodiffusion (6) comprenant un signal FeMBMS (603) comportant les informations d'émetteur (601) et les informations de temporisation (602).

12. Procédé (2) selon la revendication 11,
le signal de radiodiffusion (6) comprenant des trames d'extension DVB-T2 (FEF) (604) comportant le signal FeMBMS (603).

13. Procédé (2) selon la revendication 11 ou la revendication 12,
les informations d'émetteur (601) comprenant au moins l'un parmi :

   un identificateur d'émetteur, et

une position d'émetteur.

**14.** Procédé (2) selon l'une quelconque des revendications 11 à 13,
les informations de temporisation (602) comprenant au moins l'un parmi :

un horodatage de la transmission par l'émetteur (4) du signal de radiodiffusion (6), et
un signal de référence de positionnement (PRS) (607) mappé dans le signal de radiodiffusion (6).

**15.** Procédé (2) selon la revendication 14,
une mise en correspondance du PRS (607) avec les ressources temps-fréquence du signal de radiodiffusion (6)
en fonction d'une clé cryptographique.

**16.** Procédé (2) selon l'une quelconque des revendications 11 à 15,
la synchronisation temporelle (201) de l'émetteur (4) comprenant la fourniture d'une source d'horloge de référence
primaire (PRC) commune pour l'émetteur (4).

**17.** Procédé (2) selon l'une quelconque des revendications 11 à 16,
la synchronisation temporelle (201) de l'émetteur (4) comprenant l'utilisation du protocole de temps de précision
(PTP).

**18.** Procédé (2) selon l'une quelconque des revendications 11 à 17,
la synchronisation temporelle (201) de l'émetteur (4) comprenant l'utilisation du protocole Synchronous Ethernet
(SyncE).

**19.** Émetteur terrestre (4) d'un signal de radiodiffusion (6) numérique sans fil, comprenant

une unité de traitement (401) configurée pour
transmettre (202) le signal numérique (6) de radiodiffusion sans fil comprenant
des informations d'émetteur (601) indiquant directement ou indirectement la position géographique de l'émetteur
(4) du signal de radiodiffusion (6) ; et
des informations de temporisation (602) indiquant la temporisation du signal de radiodiffusion (6),
le signal de temporisation (6) comprenant un signal FeMBMS (603) comportant les informations d'émetteur
(601) et les informations de temporisation (602).

**20.** Émetteur (4) selon la revendication 19,
le signal de radiodiffusion (6) comprenant des trames d'extension DVB-T2 (FEF) (604) comportant le signal FeMBMS
(603).

**21.** Émetteur (4) selon la revendication 19 ou la revendication 20,
les informations d'émetteur (601) comprenant au moins l'un parmi :

un identificateur d'émetteur, et
une position d'émetteur.

**22.** Émetteur (4) selon l'une quelconque des revendications 19 à 21,
les informations de temporisation (602) comprenant au moins l'un parmi :

un horodatage de la transmission par l'émetteur (4) du signal de radiodiffusion (6), et
un signal de référence de positionnement (PRS) (607) mappé dans le signal de radiodiffusion (6).

**23.** Émetteur (4) selon la revendication 22,
une mise en correspondance du PRS (607) avec les ressources temps-fréquence du signal de radiodiffusion (6)
en fonction d'une clé cryptographique.

**24.** Émetteur (3) de positionnement géographique d'un récepteur (5) sur la base d'informations de positionnement
reçues, comprenant

la réception (302), à partir de trois émetteurs terrestres synchronisés dans le temps (4) ou plus, d'un signal de radiodiffusion (6) numérique sans fil respectif à un temps d'arrivée (TOA) respective, le signal de radiodiffusion (6) respectif comprenant

des informations d'émetteur (601) indiquant directement ou indirectement la position géographique de l'émetteur (4) du signal de radiodiffusion (6) ; et

des informations de temporisation (602) indiquant une temporisation du signal de radiodiffusion (6) ;

le calcul (303), en fonction des informations de temporisation (602) respectives et du TOA respectif, d'une pluralité de temps d'arrivée différents (TDOA) de chacun des émetteurs (4) par rapport à un émetteur de référence (4) des émetteurs (4) ;

la détermination (305), en fonction des informations d'émetteur (601) respectives, de la position géographique de chacun des émetteurs (4) ; et

le calcul (306) d'une position géographique du récepteur (5) en fonction des positions géographiques des émetteurs (4) et de la pluralité de TDOA,

le signal de radiodiffusion (6) respectif comprenant un signal FeMBMS (603) comportant les informations d'émetteur (601) et les informations de temporisation (602).

25. Récepteur (5) de signaux numériques de radiodiffusion sans fil (6), comprenant

une unité de traitement (501) configurée pour

recevoir (302), à partir d'au moins trois émetteurs terrestres synchronisés dans le temps (4), un signal de radiodiffusion (6) numérique sans fil respectif à un temps d'arrivée (TOA) respectif, le signal de radiodiffusion (6) respectif comprenant

des informations d'émetteur (601) indiquant directement ou indirectement la position géographique de l'émetteur (4) du signal de radiodiffusion (6) ; et

des informations de temporisation (602) indiquant une temporisation du signal de radiodiffusion (6) ;

le calcul (303), en fonction des informations de temporisation (602) respectives et du TOA respectif, une pluralité de temps d'arrivée différents (TDOA) de chacun des émetteurs (4) par rapport à un émetteur de référence (4) des émetteurs (4) ;

la détermination (305), en fonction des informations d'émetteur (601) respectives, de la position géographique de chacun des émetteurs (4); et

le calcul (306) de la position géographique du récepteur (5) en fonction des positions géographiques des émetteurs (4) et de la pluralité de TDOA,

le signal de radiodiffusion (6) respectif comprenant un signal FeMBMS (603) comportant les informations d'émetteur (601) et les informations de temporisation (602).

26. Réception (5) selon la revendication 25,
le signal de radiodiffusion (6) comprenant des trames d'extension DVB-T2 (FEF) (604) comportant le signal FeMBMS (603).

27. Réception (5) selon la revendication 25 ou la revendication 26,
les informations d'émetteur (601) comprenant au moins l'un parmi :

un identificateur d'émetteur, et
une position d'émetteur.

28. Récepteur (5) selon l'une quelconque des revendications 25 à 27,
les informations de temporisation (602) comprenant au moins l'un parmi :

un horodatage de la transmission par l'émetteur (4) du signal de radiodiffusion (6), et
un signal de référence de positionnement (PRS) (607) mappé dans le signal de radiodiffusion (6).

29. Récepteur (5) selon la revendication 28,
une mise en correspondance du PRS (607) avec les ressources temps-fréquence du signal de radiodiffusion (6) en fonction d'une clé cryptographique.

30. Récepteur (5) selon l'une quelconque des revendications 25 à 29,

l'unité de traitement (501) est en outre configurée pour
recevoir (304) des informations de correction indiquant une correction temporelle des informations de temporisation (602) du signal de radiodiffusion (6) respectif.

31. Récepteur (5) selon la revendication 30,
les informations de correction en fonction de la conductivité du sol détectée à une position géographique située entre les émetteurs (4).

32. Système (4, 5) de communication d'informations de positionnement pour le positionnement géographique d'un récepteur (5), comprenant

trois ou plusieurs émetteurs terrestres synchronisés dans le temps (4) de signaux de radiodiffusion (6) numérique sans fil respectifs selon l'une quelconque des revendications 19 à 23 ; et
un récepteur (5) des signaux de radiodiffusion (6) numérique sans fil selon l'une quelconque des revendications 25 à 31.

33. Signal de radiodiffusion (6) numérique sans fil, comprenant

des informations d'émetteur (601) indiquant directement ou indirectement la position géographique d'un émetteur terrestre (4) du signal de radiodiffusion (6) ; et
des informations de temporisation (602) indiquant une temporisation du signal de radiodiffusion (6) ;
le signal de radiodiffusion (6) comprenant un signal FeMBMS (603) comportant les informations d'émetteur (601) et les informations de temporisation (602).

FIG. 1

FIG. 2

FIG. 3

FIG. 4

FIG. 5

4

401

FIG. 6

5

501

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012165012 A